# EUROPEAN PATENT SPECIFICATION

(11) **EP 2 666 078 B1**
(45) Date of publication and mention of the grant of the patent: **03.01.2018**
(21) Application number: 11703310.0
(22) Date of filing: 20.01.2011
(51) Int. Cl.: G06F 3/0488, G06F 3/0489, G06F 1/16

(54) **THREE-DIMENSIONAL, MULTI-DEPTH PRESENTATION OF ICONS IN ASSOCIATION WITH DIFFERING INPUT COMPONENTS OF A USER INTERFACE**
DREIDIMENSIONALE, MULTITIEFENDARSTELLUNG VON IKONEN IM ZUSAMMENHANG MIT UNTERSCHIEDLICHEN EINGABEKOMPONENTEN EINER BENUTZERSCHNITTSTELLE
PRÉSENTATION TRIDIMENSIONNELLE À PROFONDEURS MULTIPLES D'ICÔNES EN ASSOCIATION AVEC DIFFÉRENTS COMPOSANTS D'ENTRÉE D'UNE INTERFACE UTILISATEUR

(43) Date of publication of application: 27.11.2013
(60) Divisional application: 17186215.4
(73) Proprietor: BlackBerry Limited, Waterloo, ON N2K 0A7 (CA)
(72) Inventor: DELUCA, Michael, Joseph, Rolling Meadows, Illinois 60008 (US); HIRSCH, Alexander, Samson, Rolling Meadows, Illinois 60008 (US)
(74) Representative: Hanna Moore + Curley
(86) International application number: PCT/US2011/021910
(87) International publication number: WO 2012/099592

(56) References cited:
- EP-A1- 1 667 471
- EP-A1- 2 148 269
- GB-A- 2 451 952
- US-A1- 2010 064 212
- US-A1- 2010 277 420

## Description

### Technical Field

This disclosed concept relates generally to the presentation of icons associated with a user interface and more particularly to the use of three-dimensional displays in these regards.

### Background

Portable electronic devices (such as mobile-communications devices, cellular telephony devices, pad and tablet-based computers, personal digital assistants, and so forth) typically provide a user interface to permit selection of a desired functionality and interaction in other ways with the device and its applications. As various devices become ever more capable, and as the device users themselves expect an ever-increasing number of capabilities from their devices, it is not unusual for a device to include a user interface with more than one input component or for a device to include more than one user interface.

As one example in these regards, a device may have a first user interface (such as a first touch-screen display on a first side of the device) and a second user interface (such as a second touch-screen display) on a second side of the device. This approach typically requires the device user to rotate their device 180 degrees in order to view and access the different user interfaces on the various sides of the device. Alternatively, the device user may memorize what user inputs are available on the hidden side of their device.

As another example in these regards, a device may have a user interface with more than one input component. For example, a device may have a first input component (such as a touch-screen display) on a first side of the device and one or more physical buttons, switches, touchpads, or the like on a second side of the device. As a yet further example in these regards, a device may have a user interface that makes use of user inputs on opposite sides of the device (such as the front and back of the device), where the user inputs may be part of a user interface that coordinates the inputs from the various user inputs.

US2010/0277420 A1 discloses a hand-held electronic device with a display module that comprises one or more distinct display layers arranged as a stack of display layers. Moreover, the electronic device comprises a primary side touch sensitive interface layer, and a secondary side touch-sensitive interface layer. The primary and secondary side touch-sensitive interface layers are each overlappingly arranged with respect to the one or more display layers, and adapted to receiving and detecting respective touch interactions at the front and back side surfaces of the electronic device. In one embodiment, multiple stacked objects are displayed by the stack of display layers, and the particular touch sensitive surface with which the user interacts is used to differentiate which one of the multiple stacked objects the user is interacting with. For example, the stack of objects may include individual display elements arranged in a particular order, where interacting with the back of the device selects and manipulates items from the bottom of the stack, and interacting with the front of the device selects and manipulates items from the top of the stack.

GB2451952 A discloses a touch-based user interface for an electronic device, including a housing including electronic circuitry, a plurality of buttons mounted within a first area on a back side of the housing, and a display screen mounted on a second area of a front side of the housing, the second area being opposite to at least a portion of the first area, wherein the electronic circuitry is operative (i) to display on the display screen at least one user interface control element that corresponds respectively to at least one button, each such user interface control element having a command associated therewith, and (ii) to perform the command associated with a designated user interface control element when its corresponding button is pressed. A method and a computer-readable storage medium is also described.

EP2148269 A1 describes an information processing apparatus capable of displaying a plurality of elements at a display unit by being superimposed and selecting an arbitrary element rapidly and easily among the plurality of elements by the user and an information processing method. The information processing apparatus includes an input reception unit to which signals are input from a first operation unit and a second operation unit, and a display control unit by which a plurality of first elements and a plurality of second elements are displayed by being superimposed. The first elements are arranged to be selectable or movable in accordance with the input of the first operation unit on a virtual first layer and the second elements are arranged to be selectable or movable in accordance with the input of the second operation unit on a virtual second layer which differs from the first layer.

US2010/0064212 A1 describes a consumer electronic device, such as a cellular telephone, that includes a monolithic housing. A display is positioned on a first face of the housing and displays graphics to the user. An input interface, such as a keypad, for example, accepts user input and is positioned on the opposing back face of the housing. The display and the interface are oriented in opposing directions, and the display overlays an image of the input interface over the displayed graphics to allow a user to view which keys the user presses.

EP1667471 A1 relates to a portable communication device comprising: a display unit for displaying a multi-dimensional image having at least three dimensions; a multi-dimensional image control unit controlling and providing said image to be displayed in more than one plane depending on a selection of a user; and a detector element for detecting a selection of the user.

### Summary of the Invention

In a first aspect of the invention, a method according to appended claim 1 is provided.

In a second aspect of the invention, an electronic device according to appended claim 7 is provided.

### Brief Description of the Drawings

FIG. 1 comprises a flow diagram as configured in accordance with various embodiments of the disclosed concept;
FIG. 2 comprises a perspective schematic view as configured in accordance with various embodiments of the disclosed concept;
FIG. 3 comprises a front and back elevational schematic view as configured in accordance with various embodiments of the disclosed concept;
FIG. 4 comprises a back elevational schematic view as configured in accordance with various embodiments of the disclosed concept;
FIG. 5 comprises a perspective schematic detail view as configured in accordance with various embodiments of the disclosed concept;
FIG. 6 comprises a side elevational schematic view as configured in accordance with various embodiments of the disclosed concept;
FIG. 7 comprises a front elevational schematic view as configured in accordance with various embodiments of the disclosed concept;
FIG. 8 comprises a perspective block diagram view as configured in accordance with various embodiments of the disclosed concept; and
FIG. 9 comprises a block diagram view as configured in accordance with various embodiments of the disclosed concept.

Elements in the figures are illustrated for simplicity and clarity and have not necessarily been drawn to scale. For example, the dimensions, relative positioning, or both of some of the elements in the figures may be exaggerated relative to other elements to help to improve understanding of various embodiments of the disclosed concept. Also, common but well-understood elements that are useful in a commercially feasible embodiment may be omitted from the figures in order to facilitate a less obstructed view of these various embodiments of the disclosed concept.

### Detailed Description

The present disclosure describes a user interface that employs a three-dimensional display. In this disclosure, a three-dimensional display is any display apparatus capable of conveying a stereoscopic perception of three-dimensional (3D) depth to a viewer, and may hereafter be referred to as a "display" or "stereoscopic display" for the sake of brevity. It should be understood that a three-dimensional display may utilize dual two dimensionally (2D) displayed images (one for each of the viewer's left and right eye) to create a virtual three-dimensional image. The generation of a virtual three-dimensional image or icon using a 3D display may be referred to as "presenting" the image because the image may be perceived by the viewer to appear at various distances from the viewer without regard to the physical location of the 3D display apparatus. In this disclosure, "presenting" refers to the use of a three-dimensional display to cause the display of one or more components of an image, such the displayed components create the appearance of a single image perceived by an observer. An image presented at a specific depth of presentation may comprise multiple components of the image that may be mentally combined by the observer to create the appearance of a single image at a depth of presentation (e.g., at a perceived distance) from the observer.

The three-dimensional display serves to present a plurality of icons that are associated with a user interface of the corresponding electronic device. The plurality of icons includes at least a first icon presented at a first depth of presentation and a second icon presented at a second, different depth of presentation. The first icon at the first depth of presentation is associated with a first input component of the user interface and the second icon is associated with a second, different input component of the user interface. The first input component provides for interaction with the first icon presented at the first depth of presentation, and the second input component provides for interaction with the second icon presented at the second depth of presentation.

In this disclosure, an icon that is available for interaction by a particular input component of a user interface is one that can be selected to invoke a corresponding program, process, application, function, capability, media file, Internet address, personal information management (PIM) record, or the like. An icon that is unavailable for interaction by the input component is said to be presently unavailable for selection, even though the icon may be presented via the 3D display. In other words, an icon is presented to a viewer (for example, to make the viewer aware of its presence), and is either available or unavailable for selection by interacting with a particular input component. By one approach, the icon that is unavailable for interaction with a particular input component may be presented in a disabled, incapacitated, or inoperative state. It should be understood that an icon that is unavailable for interaction with a first input component may still be available for interaction with a second input component.

Furthermore, certain types of input components may be capable of providing interaction with more than one depth of presentation. For example, a touch-sensitive surface may provide for interaction at a depth of presentation just above the surface by detecting a light touch, single tap, or mere proximity to a "touchless" touch-screen. The same touch-sensitive surface may provide for interaction with an icon at the same depth of presentation that coincides with the surface of the touch-sensitive surface, by detecting, for example, a forceful touch, double tap, or physical contact with the touch-sensitive surface.

It should also be understood that a user interface may disable, restrain, ignore, treat, or otherwise make icons presented at a particular depth of presentation that is unavailable for interaction with a particular input component of the user interface. By one approach, the user interface may refrain from responding to a detected input associated with a disabled or unavailable icon (e.g., unavailable for interaction by an input component) at the input component. Icons that are presented at the unavailable depth of presentation may be considered unavailable by virtue of the type of input component. For example, where the input component is a touch-sensitive surface of the electronic devices, icons that are presented at the depth of presentation associated with the touch-sensitive surface are available for selection by detecting a touch on the touch-sensitive service (e.g., touching the surface at a location where the icon is presented). Icons presented above or below the touch-sensitive surface may be said to be made unavailable, disabled, or treated as unavailable due to the inability to detect a touch associated with the icon.

In many examples provided in this disclosure, either or both of the first input component and the second input component may comprise touch-sensitive surfaces. Alternatively, each input component may be a touch-sensitive display, a mouse, a touchpad, a track pad, an electronic pen, a user interface glove, or other input component configured to allow interaction with icons presented at a depth of presentation associated with the input component. For example, the first depth of presentation may be perceived to be associated with a selection capability of the first input component, while a second, different depth of presentation may be perceived to be unassociated with the selection capability of the first input component, and vice versa.

By one approach the aforementioned first depth of presentation can substantially coincide with a first control surface (such as a touch-sensitive display as a first input component of the user interface) of the corresponding electronic device. So configured, the first icon (which is available for interaction by the first input component) appears at a depth of presentation that coincides with that first control surface. This may be done by presenting the left and right eye image for the first icon at substantially a same location on the three-dimensional display, or by presenting left and right eye images that are substantially identical to each other. This approach can facilitate use of the touch-sensitive display when selecting a particular icon that is presented in substantial coincidence with the touch-sensitive display.

In turn, the aforementioned second depth of presentation can substantially coincide with a second control surface (such as second touch-sensitive surface or one or more tactilely-distinctive areas) located on a different side of the electronic device from the aforementioned first control surface. So configured, the second icon (which is available for interaction by the second input component) appears at a depth of presentation that coincides with the second control surface of the electronic device. For example, the second control surface may be located on a side of the electronic device that is opposite from the first control surface. This approach can facilitate use of both control surfaces of the electronic device as part of a user interface, even though one of the control surfaces may be physically hidden from view but represented by the three-dimensional presentation of the icons at the second depth of presentation. As a simple illustrative example in these regards, some icons can be presented at a depth that is perceived to be below the display (i.e., at a depth of perception that is associated with the second control surface of the electronic device). This may be done by presenting differing left and right eye images for such icons (e.g. at slightly offset locations) on the three-dimensional display to create the perception of icons at depths below the display. Icons that are presented at a depth of presentation associated with the second control surface may be available for interaction by the second input component, and unavailable for interaction by the first input component.

Such an approach may greatly improve the overall usability of an electronic device and also the speed and convenience by which a device user can utilize and leverage the full capabilities of the device. Furthermore, the disclosed concept may prevent inadvertent assertion of at least some of the icons by limiting selection capability of each input component to, for example, only icons presented at a depth of presentation associated with each input component. When the icons that are available for interaction are perceived to be associated with a selection capability of a particular input component or are perceived to coincide in space with the selection capability of the particular input component, the overall effect is highly intuitive and ergonomically sensible. This is particularly useful when an input component may otherwise be directly hidden from view and the three-dimensional presentation of the icons provide a visual cue for the location of the input component.

Those skilled in the art will appreciate that these teachings can be implemented in a variety of commercially viable ways. It will further be appreciated that these teachings are highly scalable and can be used with a variety of differently-sized user interfaces, icons, electronic devices, and so forth. These and other benefits may become clearer upon making a thorough review and study of the following detailed description.

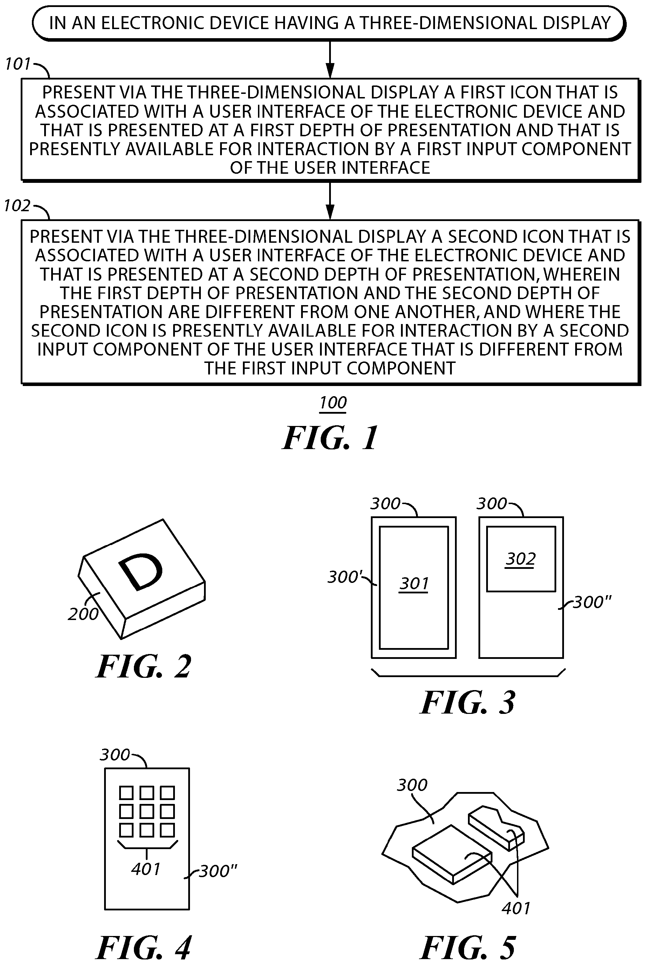

Referring now to the drawings, and in particular to FIG. 1, an illustrative process 100 that is compatible with many of these teachings will be described.

In this illustrative example, an electronic device carries out the described process 100. Electronic devices referred to in this disclosure may include, for example, portable electronic devices, simple cellular telephones, smart telephones, wireless personal digital assistants (PDAs), laptop computers, tablets, portable gaming devices, televisions, monitors, or other electronic devices. For the purposes of this description this electronic device has at least one three-dimensional display such as, but not limited to, a stereoscopic display.

The expression "three-dimensional display" may refer to a physically two-dimensional active display (such as a liquid-crystal display or a light-emitting diode display) that is capable of portraying a virtual three-dimensional image (either alone or in conjunction with, for example, special lenses through which the viewer gazes at the display). For example, a three-dimensional display comprising a stereoscopic display may present offset images that are displayed separately to the left and right eye. Both of these 2-D offset images are then mentally perceived by the viewer as a single 3-D image. Examples of this technology include anaglyph images and polarized glasses. Autostereoscopic display technologies may use optical components in the display, rather than spectacles worn by the viewer, to enable each eye to see a different image. In another example, a three-dimensional display comprising a holographic display may utilize interference of coherent light to create a light field identical to that which would emanate from an image at a particular depth of perception. Still further examples of technologies suitable for three-dimensional displays may include volumetric displays, lenticular displays, or free-space displays.

Various three-dimensional displays are known in the art and other approaches will likely be developed going forward. It should be understood that three-dimensional displays in this disclosure may comprise any display apparatus capable of conveying the appearance of an icon at various depths of perception. As the present teachings are not particularly sensitive to any specific choices in these regards, further elaboration here will not be provided for the sake of brevity.

This illustrative example also presumes that this electronic device further comprises a user interface having at least a first input component and a second, different input component. By one approach, this first input component and the three-dimensional display can comprise an integrated component (where, for example, the integrated component comprises, at least in part, a touch-sensitive display located on a front surface of the electronic device).

At step 101 this process 100 provides for presenting, via the aforementioned three-dimensional display, a plurality of icons. The plurality of icons is associated with the aforementioned user interface that corresponds to the electronic device. Icons each serve to represent a corresponding program, process, application, function, capability, media file, Internet address, personal information management (PIM) record, or the like. In many cases a plurality of such icons are displayed using, for example a touch-sensitive display. At least under some circumstances an icon is selectable based on an interaction with the user interface (with, for example, an input component of the user interface). For the sake of illustration and not by way of limitation, a particular icon may be associated with any of a variety of applications (i.e., so-called "apps").

By one approach at least some of these icons can comprise two-dimensional images. If desired, however, and continuing to presume upon the capabilities of the three-dimensional display, one or more of these icons can themselves comprise a three-dimensional image. Referring momentarily to FIG. 2, a simple illustrative example in these regards comprises a virtual three-dimensional button 200 that presents a corresponding icon (here, the alphabetic character "D").

Returning again to FIG. 1, at step 101 this presentation of icons includes presenting at least a first icon and a second icon where these icons are presented at differing depths of presentation. That is, to a viewer of the display who is able to discern the three-dimensional content thereof, one of these depths of presentation will appear, for example, to be closer to the viewer than the other. Further elaboration in these regards appears below.

In this illustrative example, and notwithstanding the different depths of presentation, both the first and second icon are available for interaction in the user interface, albeit for potentially separate input components of the user interface. (As used herein, "interaction" shall be understood to comprise asserting or identifying an icon in order to activate (or return to) a corresponding capability as a direct consequence and result of having so chosen or identifying that icon.) In particular, the first icon (which is presented at the first depth of presentation) is presently available for interaction by the aforementioned first input component of the user interface. The second icon, in turn, is presently available for interaction by the aforementioned second input component of the user interface. While the first icon is available for interaction by the first input component, it is unavailable for interaction by the second input component, and vice versa.

As suggested earlier, these first and second input components can be located on opposing sides of the electronic device. FIG. 3 offers a simple example in these regards. Here, the front side 300' of the electronic device 300 has a three-dimensional display 301 that also comprises a touch-sensitive display to serve as the first input component. The back side 300" of the electronic device 300, in turn, has a touch-sensitive surface 302 that may also comprise a two-dimensional display. (It will be understood that the specifics of this example are intended to serve only in an illustrative example and are not intended to suggest any particular limitations in these regards. For example, though the display 302 on the back side 300" of the electronic device 300 is shown as being only half the size of the display 301 on the front side 300' of the electronic device 300, essentially any other proportionality of choice could be utilized as desired. It should be understood that labels for "front side" and "back side" of a device as used in this disclosure are meant to refer interchangeably to opposing sides of an electronic device.)

If desired, the second input component on the backside 300' of the electronic device 300 can comprise other than a touch-sensitive surface. As a simple, illustrative example in these regards and again without intending any limitations by way of this example, FIG. 4 depicts an alternative of the back side 300" wherein the second input component comprises, at least in part, a keypad 401. So configured, the second input component comprises a plurality of tactilely-distinctive areas. As one example in these regards, and referring momentarily to FIG. 5, each of the keys of the keypad 401 can comprise a raised keycap that is generally haptically discernable by the fingers of a device user. It should be understood that other types of input components can be conceivably used on the back side 300" of the device, such as would be readily apparent to those of skill in the art.

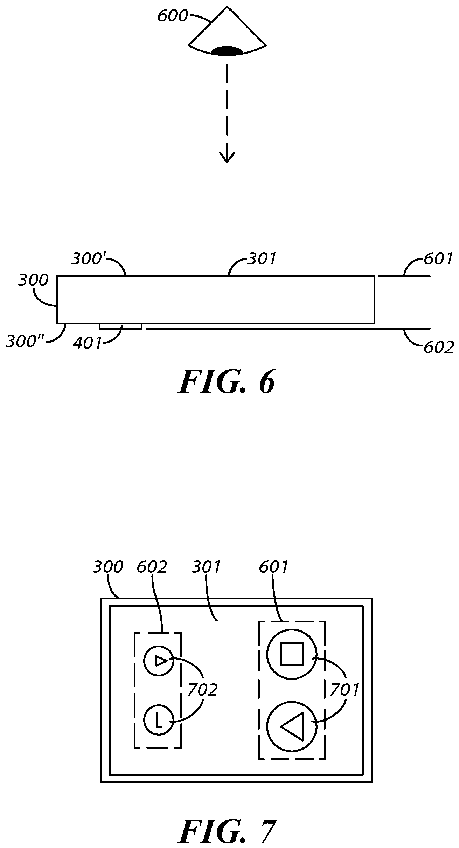

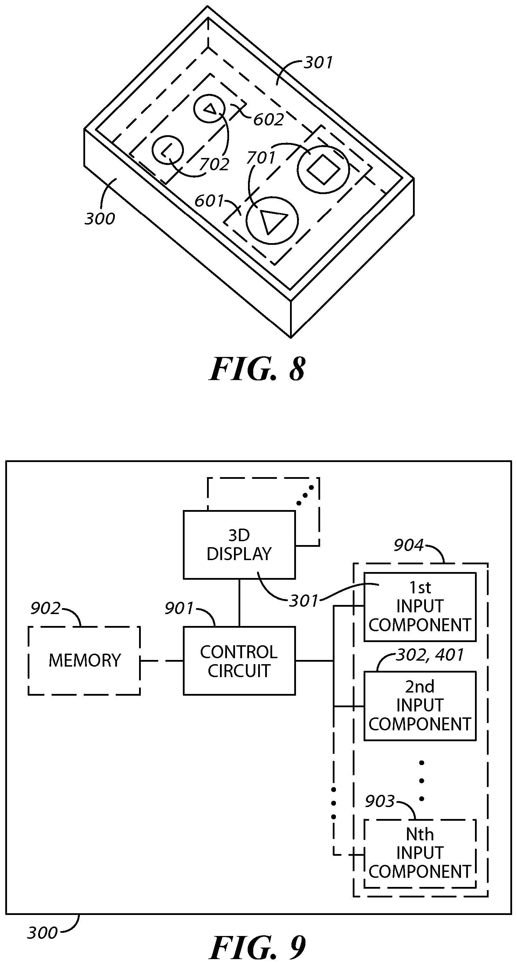

FIG. 6 provides a side view of such an electronic device 300 having a touch-sensitive display 301 (that also provides the aforementioned three-dimensional presentations of icons) on one side of the device 300 and a keypad 401 on an opposing side of the electronic device 300. In this example, and from the point of view of an observing viewer 600, the aforementioned first depth of presentation 601 may be substantially coplanar with the touch-sensitive display 301 and the second depth of presentation 602 may be substantially coplanar with the keypad 401. Accordingly, and referring now to FIGS. 7 and 8, icons 701 presented at that first depth of presentation 601 substantially coincide with the control surface of the touch-sensitive display 301. Similarly, icons 702 presented at the second depth of presentation 602 substantially coincide with the control surface of the keypad 401 (in this case, one or more of the keys of the keypad 401).

Because the first depth of presentation 601 is closer to the observing viewer 600 than the second depth of presentation 602, the icons 701 displayed at the first depth of presentation 601 will typically appear to be larger than the icons 702 displayed at the second depth of presentation 602 in keeping with the perspective that would prevail if the device 300 were in fact transparent and the observing viewer 600 were able to actually see such icons physically disposed on or in conjunction with the keypad 401.

By one approach this difference in size can reflect the actual geometry and form factor of the device. If desired, however, this difference in size can be exaggerated to make it easier to visually distinguish the icons that are associated with the input component on the front surface from the icons that are associated with the input component on the backside of the electronic device 300.

It will be understood that the displayed icons can be laterally offset from one another as desired. For example, by one approach, the icons appearing at differing depths of presentation can be substantially coincident such that they appear to be layered, offset, or even stacked one above the other. In such a case it may be useful to present at least the higher-level icons in a transparent or translucent manner to permit lower-level icons to be readily perceivable by the observing viewer. As another example, and again as desired, the icons appearing at differing depths of presentation can be laterally offset from one another to avoid having icons at higher levels occluding part or all of the icons that appear at lower depths of presentation.

Those skilled in the art will recognize and understand that there are no particular limitations in these regards as to how many icons are presented. These teachings will also accommodate providing more than one cluster of grouped icons at a given, shared depth of presentation if desired. For example, a first group of three icons could be presented at one portion of any of the depicted depths of presentation and a second group of icons could also be presented at a different, removed portion of that same depth of presentation.

In the illustrative examples described above the icons are all available for interaction by a particular input component of a user interface, albeit with at least one icon pertaining to a first input component associated with a first depth of presentation while at least another such icon pertains to second input component associated with another depth of presentation. These teachings will also optionally accommodate, if desired, also presenting (for example, at yet other depths of presentation) other icons that are not available for interaction by any input component. Various details in these regards, including the use of additional depths of presentation and moving icons from one depth of presentation to another, can be found in a related PCT application no. PCT/US11/21893, entitled THREE-DIMENSIONAL, MULTI-DEPTH PRESENTATION OF ICONS ASSOCIATED WITH A USER INTERFACE.

The above-described processes are readily enabled using any of a wide variety of available, readily-configured platforms, including partially or wholly programmable platforms as are known in the art or dedicated purpose platforms as may be desired for some applications. Referring now to FIG. 9, an illustrative approach to such a platform will now be described.

In this illustrative example the electronic device 300 comprises a portable electronic device. As explained above, however, any number of devices can readily serve in these same regards as desired This electronic device 300 comprises, at least in part, a control circuit 901 that operably couples to one or more three-dimensional displays 301. The electronic device 300 also comprises a user interface 904 with two or more input components. By one approach this can include a first input component comprising a touch-sensitive capability that comprises a part of one or more of the aforementioned three-dimensional displays 301. A second input component of the user interface can comprise any of a variety of modalities of interaction as desired. For example, in addition to the touch-sensitive display 302 or key-based approaches 401 described above, this input component may comprise a gesture-recognition interface, a speech-recognition interface, physical (as versus virtual) buttons, switches, scroll wheels, track pads, cameras, accelerometers, gyroscopes, proximity sensors, or the like, and so forth. And, as suggested by optional inclusion of the Nth input component 903, these teachings will accommodate any number of additional input components as desired.

The control circuit 901 can comprise a fixed-purpose hard-wired platform or can comprise a partially or wholly programmable platform as desired. This control circuit 901 is configured (for example, by corresponding programming as will be well understood by those skilled in the art) to carry out one or more of the features described herein. For example, programming executed by the control circuit 901 may cause the electronic device to:
use a three-dimensional display to present a virtual three-dimensional scene comprising a plurality of icons, including at least a first icon presented at a first depth of presentation and a second icon presented at a second depth of presentation, where the first and second depths of presentation are different from one another;
wherein the first icon is associated with the first input component of the user interface, and the second icon is associated with the second input component of the user interface; and
wherein the first input component provides for interaction with the first icon presented at the first depth of presentation, and the second input component provides for interaction with the second icon presented at a second depth of presentation. All of these architectural options regarding fixed-purpose designs as well as partial and full programmability are well known and understood in the art and require no further description here.

By one approach this electronic device 300 can further comprise a memory 902 that operably couples to the control circuit 901 (or, if desired, comprises a part thereof). This memory can serve to store content to be displayed by the three-dimensional display 301 (such as one or more of the icons contemplated herein). When the control circuit 901 comprises a component that is at least partially programmable, this memory 902 can also serve to store the instructions to be carried out by the control circuit 901.

Such an electronic device 300 may be comprised of a plurality of physically distinct elements as is suggested by the illustration shown in FIG. 9. It is also possible, however, to view this illustration as comprising a logical view, in which case one or more of these elements can be enabled and realized via a shared platform.

So configured, an electronic device having a three-dimensional display capability can simultaneously present, in a useful and intuitive manner, control-surface icons for control surfaces that are available on opposing sides of the device without requiring the device user to flip the device. Presuming the availability of the three-dimensional display itself, these teachings can be readily implemented in high cost-effective ways and often without requiring other dedicated physical components.

The present disclosure also shows a way of associating a tactilely-distinctive area such as a convex or concave shape formed on the back of a device with a similarly-shaped three-dimensional image. Thus when a shape is present on the back of the device, a corresponding conformal three-dimensional image (corresponding substantially to the shape and the depth location of the shape on the back of the device) may be presented. The similarity between the feel of the tactilely-distinctive shape and the corresponding image has the advantage of intuitively associating the image with the shape. For example, a rectangular bump out the back of the device can have an icon with a conforming shape associated therewith, such that an interaction with the rectangular bump activates an associated process. In other embodiments, the bump and corresponding image need not be related to the user interface and may contribute to the ornamental elements of the device.

It should be understood that the terms and expressions used herein have the ordinary technical meaning as is accorded to such terms and expressions by persons skilled in the technical field as set forth above except where different specific meanings have otherwise been set forth herein. Certain actions or steps may be described or depicted in a particular order of occurrence while those skilled in the art will understand that certain actions or steps may be performed in a variety of sequences without departing from the scope of the present invention as defined by the appended claims.

Those skilled in the art will recognize that a wide variety of modifications, alterations, and combinations can be made with respect to the above described embodiments without departing from the scope of the present invention as defined by the appended claims.

## Claims

1. A method in an electronic device (300) having a three-dimensional display (301), the method comprising:
presenting via the three-dimensional display (301) a plurality of icons associated with a user interface (904) of the electronic device (300), the plurality of icons including a first icon (701) presented at a first depth of presentation (601) and a second icon (702) presented at a second depth of presentation (602) different from the first depth of presentation (601);
associating the first icon (701) with a first input component of the user interface (904), and associating the second icon (702) with a second input component of the user interface (904), whereby the first input component provides for interaction with the first icon (701) presented at the first depth of presentation (601), and the second input component provides for interaction with the second icon (702) presented at the second depth of presentation (602);
wherein the first input component of the user interface (904) is on a front side (300') of the electronic device (300) and the second input component of the user interface (904) is on a back side (300") of the electronic device (300), the first input component of the user interface (904) comprising a first touch-sensitive surface and the first touch-sensitive surface comprising a first surface (301) of the electronic device; and
wherein the second input component of the user interface (904) comprises, at least in part, a keypad (401) having at least one raised key, and the second depth of presentation (602) at least substantially coincides with the keypad (401) such that the second icon (702) at the second depth of presentation (602) at least substantially coincides with said at least one raised key of the keypad (401).

2. The method of claim 1, wherein the first depth of presentation (601) substantially coincides with the first surface (301) of the electronic device (300).

3. The method of claim 1, wherein the three-dimensional display (301) comprises a touch-sensitive display and the first touch-sensitive surface comprises the touch-sensitive display.

4. The method of claim 1, wherein the at least one raised key comprises, at least in part, at least one tactilely-distinctive area.

5. The method of claim 4, wherein the at least one tactilely-distinctive area has a three-dimensional shape and the second icon (702) has a corresponding three-dimensional shape.

6. The method of claim 1, wherein the three-dimensional display (301) comprises a stereoscopic display.

7. An electronic device (300) comprising a three-dimensional display (301), a user interface (904) with a first input component on a front side (300') of the electronic device (300) and a second input component on a back side (300") of the electronic device (300), and a control circuit (901) configured to carry out the method of any of claims 1 through 6.

## Patentansprüche

1. Verfahren in einer elektronischen Vorrichtung (300), die eine dreidimensionale Anzeige (301) besitzt, wobei das Verfahren Folgendes umfasst:
Darstellen über die dreidimensionale Anzeige (301) mehrerer Icons, die einer Anwenderschnittstelle (904) der elektronischen Vorrichtung (300) zugeordnet sind, wobei die mehreren Icons ein erstes Icon (701), das auf einer ersten Darstellungstiefe (601) dargestellt wird, und ein zweites Icon (702), das auf einer von der ersten Darstellungstiefe (601) verschiedenen zweiten Darstellungstiefe (602) dargestellt wird, enthalten;
Zuordnen des ersten Icons (701) zu einer ersten Eingangskomponente der Anwenderschnittstelle (904) und Zuordnen das zweiten Icons (702) zu einer zweiten Eingangskomponente der Anwenderschnittstelle (904), wodurch die erste Eingangskomponente eine Wechselwirkung mit dem ersten Icon (701), das auf der ersten Darstellungstiefe (601) dargestellt wird, bereitstellt und die zweite Eingangskomponente eine Wechselwirkung mit dem zweiten Icon (702), das auf der zweiten Darstellungstiefe (602) dargestellt wird, bereitstellt;
wobei sich die erste Eingangskomponente der Anwenderschnittstelle (904) auf einer Vorderseite (300') der elektronischen Vorrichtung (300) befindet und wobei sich die zweite Eingangskomponente der Anwenderschnittstelle (904) auf einer Rückseite (300") der elektronischen Vorrichtung (300) befindet, wobei die erste Eingangskomponente der Anwenderschnittstelle (904) eine erste berührungsempfindliche Oberfläche aufweist und die erste berührungsempfindliche Oberfläche eine erste Oberfläche (301) der elektronische Vorrichtung enthält; und
wobei die zweite Eingangskomponente der Anwenderschnittstelle (904) wenigstens teilweise ein Tastenfeld (401) mit wenigstens einer erhöhten Taste enthält und
die zweite Darstellungstiefe (602) wenigstens im Wesentlichen mit dem Tastenfeld (401) übereinstimmt, so dass das zweite Icon (702) auf der zweiten Darstellungstiefe (602) wenigstens im Wesentlichen mit der wenigstens einen erhöhten Taste des Tastenfeldes (401) übereinstimmt.

2. Verfahren nach Anspruch 1, wobei die erste Darstellungstiefe (601) mit der ersten Oberfläche (301) der elektronischen Vorrichtung (300) im Wesentlichen übereinstimmt.

3. Verfahren nach Anspruch 1, wobei die dreidimensionale Anzeige (301) eine berührungsempfindliche Anzeige aufweist und die erste berührungsempfindliche Oberfläche die berührungsempfindliche Anzeige enthält.

4. Verfahren nach Anspruch 1, wobei die wenigstens eine erhöhte Taste wenigstens teilweise wenigstens einen taktil unterscheidenden Bereich enthält.

5. Verfahren nach Anspruch 4, wobei der wenigstens eine taktil unterscheidende Bereich eine dreidimensionale Form hat und das zweite Icon (702) eine entsprechende dreidimensionale Form hat.

6. Verfahren nach Anspruch 1, wobei die dreidimensionale Anzeige (301) eine stereoskopische Anzeige umfasst.

7. Elektronische Vorrichtung (300), die eine dreidimensionale Anzeige (301), eine Anwenderschnittstelle (904) mit einer ersten Eingangskomponente auf einer Vorderseite (300') der elektronischen Vorrichtung (300) und einer zweiten Eingangskomponente auf einer Rückseite (300") der elektronischen Vorrichtung (300) und eine Steuerschaltung (901), die konfiguriert ist, das Verfahren nach einem der Ansprüche 1 bis 6 auszuführen, umfasst.

## Revendications

1. Procédé dans un dispositif électronique (300) comportant un dispositif d'affichage en trois dimensions (301), le procédé comprenant :
la présentation, par l'intermédiaire du dispositif d'affichage en trois dimensions (301), d'une pluralité d'icônes associées à une interface d'utilisateur (904) du dispositif électronique (300), la pluralité d'icônes comprenant une première icône (701) présentée à une première profondeur de présentation (601) et une deuxième icône (702) présentée à une deuxième profondeur de présentation (602) différente de la première profondeur de présentation (601) ;
l'association de la première icône (701) à un premier composant d'entrée de l'interface d'utilisateur (904), et l'association de la deuxième icône (702) à un deuxième composant d'entrée de l'interface d'utilisateur (904), grâce à quoi le premier composant d'entrée permet une interaction avec la première icône (701) présentée à la première profondeur de présentation (601), et le deuxième composant d'entrée permet une interaction avec la deuxième icône (702) présentée à la deuxième profondeur de présentation (602) ;
dans lequel le premier composant d'entrée de l'interface d'utilisateur (904) se trouve sur un côté avant (300') du dispositif électronique (300) et le deuxième composant d'entrée de l'interface d'utilisateur (904) se trouve sur un côté arrière (300") du dispositif électronique (300), le premier composant d'entrée de l'interface d'utilisateur (904) comprenant une première surface tactile et la première surface tactile constituant une première surface (301) du dispositif électronique ; et
dans lequel le deuxième composant d'entrée de l'interface d'utilisateur (904) comprend, au moins en partie, un clavier (401) comportant au moins une touche surélevée, et
la deuxième profondeur de présentation (602) coïncide au moins sensiblement avec le clavier (401), de telle sorte que la deuxième icône (702) à la deuxième profondeur de présentation (602) coïncide au moins sensiblement avec ladite au moins une touche surélevée du clavier (401).

2. Procédé selon la revendication 1, dans lequel la première profondeur de présentation (601) coïncide sensiblement avec la première surface (301) du dispositif électronique (300).

3. Procédé selon la revendication 1, dans lequel le dispositif d'affichage en trois dimensions (301) comprend un dispositif d'affichage tactile et la première surface tactile constitue le dispositif d'affichage tactile.

4. Procédé selon la revendication 1, dans lequel l'au moins une touche surélevée comprend, au moins en partie, au moins une zone pouvant être distinguée de façon tactile.

5. Procédé selon la revendication 4, dans lequel l'au moins une zone pouvant être distinguée de façon tactile a une forme en trois dimensions, et la deuxième icône (702) a une forme en trois dimensions correspondante.

6. Procédé selon la revendication 1, dans lequel le dispositif d'affichage en trois dimensions (301) comprend un dispositif d'affichage stéréoscopique.

7. Dispositif électronique (300) comprenant un dispositif d'affichage en trois dimensions (301), une interface d'utilisateur (904) avec un premier composant d'entrée sur un côté avant (300') du dispositif électronique (300) et un deuxième composant d'entrée sur un côté arrière (300") du dispositif électronique (300), et un circuit de commande (901) configuré pour exécuter le procédé selon l'une quelconque des revendications 1 à 6.
